# EUROPEAN PATENT SPECIFICATION

(11) **EP 3 471 972 B1**
(45) Date of publication and mention of the grant of the patent: **13.11.2019**
(21) Application number: 17730464.9
(22) Date of filing: 14.06.2017
(51) Int. Cl.: B60C 9/00, D07B 1/16

(54) **METHOD OF TREATING TYRE REINFORCING PLY CORDS**
VERFAHREN ZUR BEHANDLUNG VON REIFENVERSTÄRKENDEM LAGENKORD
PROCÉDÉ DE TRAITEMENT DE FILS DE NAPPE DE RENFORCEMENT DE PNEU

(30) Priority: 17.06.2016 IT UA20164464
(43) Date of publication of application: 24.04.2019
(73) Proprietor: Bridgestone Corporation, Tokyo 104-8340 (JP)
(72) Inventor: CALIANO, Ludovica, 00128 Roma (IT); MADAU, Francesco, 00128 Roma (IT)
(74) Representative: Marchetti, Alessio
(86) International application number: PCT/EP2017/064559
(87) International publication number: WO 2017/216232

(56) References cited:
- WO-A1-2014/049058
- FR-A1- 2 925 922

## Description

The present invention relates to a method of treating tyre reinforcing ply cords.

In tyre production, in order to ensure the required resistance standards, reinforcing plies are utilized in tyres that are made from a textile material (nylon, rayon, polyester, aramid) and/or a metallic material, such as for example steel. Reinforcing plies are commonly utilized as a reinforcing material within the carcass and the belts.

The carcass serves to define the geometry of the tyre, to support the load and to convey vehicle stresses to the ground and to guarantee fatigue resistance within stressed areas. The belts are arranged between the carcass and the tread and serve to further increase the resistance of the tyre, stabilizing the tread and providing protection against shocks and punctures to the innermost layers.

The reinforcing plies are incorporated into a layer of rubber with a thickness of about 1 mm. This layer of rubber is commonly referred to by the English term "skim" and this wording will be utilized within the remainder of this document.

As is known, the metallic cords that constitute the reinforcing plies consist of wires that are twisted together. It often happens that the rubber of the skim cannot penetrate the gaps between one wire and the next. In this way, between the rubber of the skim and the cord, points of discontinuity are thus created that may compromise adhesion and the cord itself.

Furthermore, at the point of the cord where the rubber has not successfully penetrated, corrosion phenomena can arise that compromise the correct operation of the cord and, therefore, the life of the tyre.

For a correct evaluation of the problems set out above, it must be considered that although metallic cords exist that, thanks to the special shape thereof can guarantee improved performance, the utilization thereof is however particularly limited insofar as, due to the particular conformation thereof, they suffer even more from the disadvantages described above.

The need was therefore felt for a solution that is capable of guaranteeing the absence of rubberless gaps within the metallic cords and, therefore, of avoiding the disadvantages reported above.

The inventors of the present invention have developed a method of treating cords that is capable of solving those problems relating to the absence of rubber within the gaps of the cord.

The object of the present invention is a method for making rubber portions comprising tyre metallic reinforcing plies; said method comprising an incorporation step wherein metallic cords that constitute the plies are arranged between two skim layers; said method being characterized in that it comprises a treatment step for the metallic cords, that precedes said incorporation step and wherein the metallic cords are wetted with a diene elastomeric polymer with a viscosity of between 3 and 10 Pa·s at room temperature.

Preferably, said diene elastomeric polymer comprises functional groups comprising -OH groups.

Preferably, said diene elastomeric polymer has a molecular weight of between 1000 and 7000.

Preferably, said diene elastomeric polymer is polybutadiene.

Preferably, said diene elastomeric polymer is mixed with Cobalt salts.

In this way it will be possible to eliminate the cobalt salts from the skim mixture notably reducing the quantity utilized with obvious advantages in terms of safety that this entails.

Preferably, said incorporation step includes a calendering operation.

A further object of the present invention is a tyre portion made by the method according to the present invention.

A still further object of the present invention is a tyre comprising a portion made by the method according to the present invention.

For a better understanding of the invention, the following examples are for illustrative and non-limiting purposes.

Four composites were prepared each of which consisted of metallic cords and two skim layers arranged such as to incorporate the metallic cords by means of a calendering operation.

The type of metallic cords and skims were the same for all four composites.

The four composites differ only insofar as the treatment to which the cords were subjected before being incorporated. In particular, composite A was prepared without the cords having been subjected to any treatment; composite B was prepared by treating the metallic cords with polybutadiene with an average molecular weight of 8000 Da and a viscosity equal to 15 Pa·s at room temperature; composite C was prepared by treating the metallic cords with functionalized polybutadiene with hydroxyl groups, with an average molecular weight of 2500 Da and a viscosity of 8 Pa·s at room temperature; composite D was prepared by treating the metallic cords with polybutadiene with an average molecular weight of 2500 Da and a viscosity equal to 0.75 Pa·s at room temperature.

The molecular weight of the polymers was measured using a method according to the ISO-11344 standard.

The cords utilized in the examples are made of steel and identified with the description 3+9+15x0.23
In particular, the cords were immersed in polybutadiene for a period of time equal to a maximum of 20 seconds.

The composition in phr of the compound utilized as skim in the examples is listed in Table I.

**TABLE I**

| | |
|---|---|
| Natural rubber | 100 |
| Carbon black | 40 |
| Sulfur | 7 |
| accelerator | 1.5 |
| Cobalt salt | 0.88 |

The natural rubber is made up of a polymer base composed of natural origin cis-1,4-polyisoprene.

The accelerator utilized is N-tert-butyl-2-benzothiazyl-sulfenamide (TBBS).

The cobalt salt utilized is Co-Boron neodecanoate.

Below, a procedure for the preparation of skim compounds is reported.

### (1^{st} mixing step)

Before the start of the mixing, a mixer with tangential rotors (commonly called Banbury) and an internal volume of between 230 and 270 liters was loaded with the polymer base, the reinforcing filler and, where required, the Cobalt salts, reaching a filling factor of 66-72%.

The mixer was operated at a speed of 40-60 rpm, and the mixture thus formed was discharged once a temperature of 140-160°C had been reached.

### (2^{nd} mixing step)

The vulcanization system was added to the mixture obtained from the previous step, reaching a filling factor of 63-67%.

The mixer was operated at a speed of 20-40 rpm, and the mixture thus formed was discharged once a temperature of 100-110°C had been reached.

The composites A-D were made by means of a calendering operation wherein the cords were arranged between two skim layers.

The composites thus made, once vulcanized, were subjected to adhesion and corrosion tests.

The adhesion tests were performed by separating the two parts of the cord-rubber composite by means of the application of a load in order to then estimate the percentage of ply coated by the rubber.

The corrosion tests were performed according to the CEC (Cut and corrosion test) method - US 5598693 A.

In Table II the values measured for the adhesion and corrosion tests are listed. The values of the corrosion test are listed in indexed form with respect to the values measured for composite A.

For a correct evaluation of the indexed values listed in Table II, it should be specified that with respect to adhesion the highest values are considered to be the best, whilst with respect to corrosion the lowest values are considered to be the best.

**TABLE II**

| | A | B | C | D |
|---|---|---|---|---|
| Adhesion | 100 | 103 | 111 | 108 |
| Corrosion | 100 | 53 | 32 | 42 |

As can be seen from Table II the treatment of the cords according to the invention is capable of guaranteeing a net improvement in terms of both adhesion and corrosion. In particular, from the values in Table II it is clear that only treatment with a polymer having a viscosity of between 3 and 10 Pa·s will ensure these improvements. The inventors of the present invention have, in fact, found that a polymer with a viscosity lower than 3 Pa·s cannot remain within the gaps of the cord, and that a polymer with a viscosity greater than 10 Pa·s is, instead, unable to reach the gaps of the cord. In both of the above cases, despite the cords being treated, the spaces within the gaps in the cord will persist, with the consequence of the related disadvantages appearing again.

## Claims

1. Method for making rubber portions comprising tyre metallic reinforcing plies; said method comprising an incorporation step wherein metallic cords which constitute the plies are arranged between two skim layers; said method being **characterized in that** it comprises a treatment step for the metallic cords, that precedes said incorporation step and wherein the metallic cords are wetted with a diene elastomeric polymer with a viscosity of between 3 and 10 Pa·s at room temperature.

2. Method according to claim 1, **characterized in that** said diene elastomeric polymer comprises functional groups comprising -OH groups.

3. Method according to claim 1 or 2, **characterized in that** the elastomeric polymer has a molecular weight of between 1000 and 7000.

4. Method according to one of the preceding claims, **characterized in that** said diene elastomer polymer is polybutadiene.

5. Method according to one of the preceding claims, **characterized in that** said diene elastomer polymer is mixed with Cobalt salts.

6. Method according to one of the preceding claims, **characterized in that** said incorporation step envisages a calendering operation.

7. Tyre portion made by the method according to any of the preceding claims.

8. Tyre comprising a portion according to claim 7.

## Patentansprüche

1. Verfahren zum Herstellen von Gummiabschnitten, die metallische Reifenverstärkungslagen umfassen; wobei das Verfahren einen Einarbeitungsschritt umfasst, bei dem metallische Korde, die die Lagen bilden, zwischen zwei Skimschichten angeordnet sind; wobei das Verfahren **dadurch gekennzeichnet ist, dass** es einen Behandlungsschritt für die metallischen Korde umfasst, der dem Einarbeitungsschritt vorausgeht und wobei die metallischen Korde mit einem Dien-Elastomerpolymer mit einer Viskosität zwischen 3 und 10 Pa·s bei Raumtemperatur benetzt werden.

2. Verfahren nach Anspruch 1, **dadurch gekennzeichnet, dass** das Dien-Elastomerpolymer funktionelle Gruppen umfasst, die -OH-Gruppen umfassen.

3. Verfahren nach Anspruch 1 oder 2, **dadurch gekennzeichnet, dass** das Elastomerpolymer ein Molekulargewicht zwischen 1000 und 7000 aufweist.

4. Verfahren nach einem der vorstehenden Ansprüche, **dadurch gekennzeichnet, dass** das Dien-Elastomerpolymer Polybutadien ist.

5. Verfahren nach einem der vorstehenden Ansprüche, **dadurch gekennzeichnet, dass** das Dien-Elastomerpolymer mit Kobaltsalzen vermischt ist.

6. Verfahren nach einem der vorstehenden Ansprüche, **dadurch gekennzeichnet, dass** der Einarbeitungsschritt einen Kalandriervorgang vorsieht.

7. Reifenabschnitt, gefertigt durch das Verfahren nach einem der vorstehenden Ansprüche.

8. Reifen, umfassend einen Abschnitt nach Anspruch 7.

## Revendications

1. Procédé de fabrication de parties en caoutchouc comprenant des nappes de renfort métalliques de pneumatique ; ledit procédé comprenant une étape d'incorporation dans laquelle des câbles métalliques qui constituent les nappes sont disposés entre deux couches de calandrage ; ledit procédé étant **caractérisé en ce qu'il** comprend une étape de traitement des câbles métalliques, qui précède ladite étape d'incorporation et dans lequel les câbles métalliques sont mouillés avec un polymère élastomère diénique de viscosité comprise entre 3 et 10 Pa.s à température ambiante.

2. Procédé selon la revendication 1, **caractérisé en ce que** ledit polymère élastomère diénique comprend des groupes fonctionnels comprenant des groupes -OH.

3. Procédé selon la revendication 1 ou 2, **caractérisé en ce que** le polymère élastomère a un poids moléculaire compris entre 1000 et 7000.

4. Procédé selon l'une des revendications précédentes, **caractérisé en ce que** ledit polymère élastomère diénique est le polybutadiène.

5. Procédé selon l'une des revendications précédentes, **caractérisé en ce que** ledit polymère élastomère diénique est mélangé à des sels de Cobalt.

6. Procédé selon l'une des revendications précédentes, **caractérisé en ce que** ladite étape d'incorporation prévoit une opération de calandrage.

7. Partie de pneumatique réalisée par le procédé selon l'une quelconque des revendications précédentes.

8. Pneumatique comprenant une partie selon la revendication 7.
